# EUROPEAN PATENT APPLICATION

(11) **EP 2 481 645 A1**
(43) Date of publication of application: **01.08.2012**
(21) Application number: 12151891.4
(22) Date of filing: 20.01.2012
(51) Int. Cl.: B60R 21/34

(54) **Hood lock device**

(30) Priority: 27.01.2011 JP 2011015333
(71) Applicant: Honda Motor Co., Ltd., Tokyo 107-8556 (JP)
(72) Inventor: Gunji, Yasuaki, Saitama, 351-0193 (JP)
(74) Representative: Feller, Frank

(57) **Abstract**

A bracket (25) supporting a base portion (28) of a lock device (18) to a frame member (17) includes paired first fixing portions (31a) which are fixed to the frame member (17), a second fixing portion (31c, 32a) to which the base portion (28) is fixed, and paired deformable portions (31b) which are formed of metal plates, and each of which is bent into a U shape with opposite ends thereof connected respectively with a corresponding one of the paired first fixing portions (31a) and the second fixing portion (31c, 32a). Thus, when a collision load of a frontal collision imposed on a front hood is transmitted to the base portion (28), plastic deformation occurs in the deformable portions (31b) of the bracket (25), whereby the base portion (28) is moved rearward to ensure an impact absorption stroke of the front hood. At this time, the load causing the plastic deformation of the deformable portions (31b) is constant without being influenced by the bolt tightening torque. Thus, a front portion of the front hood is always moved in a stroke rearward at an optimum load, so that the effect of absorbing the collision energy can be enhanced. Accordingly, it is possible to ensure an impact absorption stroke at collision of a front portion of an automobile by moving a front portion of a front hood rearward at a desirable load.

## Description

### BACKGROUND OF THE INVENTION

FIELD OF THE INVENTION

The present invention relates to a hood lock device in which a striker provided in a protruding manner downward from a front portion of a front hood is locked with a lock device provided on a frame member of a vehicle body, the front hood openably and closably covering an engine room.

DESCRIPTION OF THE RELATED ART

At a collision of a front hood of an automobile with a pedestrian, if the front hood collapses in a large stroke to absorb collision energy, impact imposed on the pedestrian can be reduced. However, since a striker of the front hood is locked with a lock device, which is provided to a frame member such as a bulkhead, in order that the front hood be locked at a closed position, movement of the front hood is hindered by this portion. This causes a problem that a sufficient impact absorption stroke cannot be ensured.

Hence, the following hood lock device is publicly known by Japanese Patent Application Laid-open No. 2009-255635. Specifically, in the hood lock device, long holes extending in a front-rear direction are formed in brackets provided on a frame member of a vehicle body, and a base portion of the lock device is slidably fastened to the long holes with bolts. With this structure, an input of a collision load causes the base portion to slide rearward to ensure an impact absorption stroke.

In addition, the front hood receives the collision load not only from the front but also from the above. In this regard, the following structure is publicly known by Japanese Patent Application Laid-open No. 2009-57708. In the structure, long holes extending in an up-down direction are formed in brackets. With this structure, an input of a collision load causes a base portion to slide downward to ensure the impact absorption stroke.

### SUMMARY OF THE INVENTION

Incidentally, the inventions described in Japanese Patent Application Laid-open Nos. 2009-255635 and 2009-57708 have a problem that a bolt tightening torque for fastening the base portion to the bracket is difficult to manage. Specifically, if the bolt tightening torque is too strong, the base portion might not be able to slide even when the collision load is inputted. On the other hand, if the bolt tightening torque is too weak, the base portion might move due to impact at the time of closing the front hood.

The present invention has been made in view of the aforementioned circumstances, and an object thereof is to ensure an impact absorption stroke at collision of a front portion of an automobile by moving a front portion of a front hood rearward at a desirable load.

In order to achieve the object, according to the invention described in claim 1, there is provided a hood lock device in which a striker provided in a protruding manner downward from a front portion of a front hood is locked with a lock device provided on a frame member of a vehicle body, the front hood openably and closably covering an engine room, **characterized in that** the lock device comprises: a bracket fixed on a rear surface of the frame member; a base portion fixed to the bracket; and a hook movably supported by the base portion and configured to be engaged with and disengaged from the striker, and the bracket comprises: paired first fixing portions which are provided on opposite sides in a right-left direction and are fixed to the frame member; a second fixing portion which is provided at a middle in the right-left direction and to which the base portion is fixed; and paired deformable portions which are formed of metal plates, and each of which is bent into a U shape with opposite ends thereof connected respectively with a corresponding one of the paired first fixing portions and the second fixing portion.

According to the configuration of claim 1, a collision load of frontal collision imposed on the front hood is transmitted from the striker to the lock device provided on the frame member. The bracket of the lock device includes the paired first fixing portions which are provided on opposite sides in the right-left direction and are fixed to the frame member, the second fixing portion which is provided at the middle in the right-left direction and to which the base portion is fixed, and the paired deformable portions each of which is bent into a U shape with opposite ends thereof connected respectively with a corresponding one of the paired first fixing portions and the second fixing portion, and which are formed of metal plates. Thus, when the collision load is transmitted to the base portion through the hook of the lock device, plastic deformation occurs in the deformable portions each connecting the corresponding first fixing portion and the second fixing portion, whereby the base portion is moved rearward to ensure an impact absorption stroke of the front hood. At this time, the load causing the plastic deformation of the deformable portions is constant without being influenced by the bolt tightening torque. Thus, the front portion of the front hood is always moved in a stroke rearward at an optimum load, so that the effect of absorbing the collision energy can be enhanced.

Further, according to the invention described in claim 2, in addition to the configuration of claim 1, there is provided the hood lock device, wherein the bracket comprises a contact portion between a right and left pair of the second fixing portions, the contact portion contacting the rear surface of the frame member.

According to the configuration of claim 2, the bracket includes the contact portion between the paired right and left second fixing portions, the contact portion contacting the rear surface of the frame member. Accordingly, when impact at the time of strongly closing the front hood is imposed on the bracket through the base portion, the impact is transmitted from the contact portion to the frame member. Thereby, the rigidity of the bracket is ensured, and downward movement of the lock device due to the impact can be prevented.

Further, according to the invention described in claim 3, in addition to the configuration of claim 2, there is provided the hood lock device, wherein the second fixing portions are each inclined from an upper front to a lower rear.

According to the configuration of claim 3, the second fixing portions are each inclined from the upper front to the lower rear. Thus, a downward load at the time of strongly closing the front hood urges the second fixing portions frontward to press the contact portion against the frame member, and thereby the rigidity of the bracket against a force in an up-down direction can be enhanced further.

Further, according to the invention described in claim 4, in addition to the configuration of claim 2 or 3, there is provided the hood lock device, wherein a locking claw formed by cutting and bending up the rear surface of the frame member is engaged with a slit formed in the contact portion.

According to the configuration of claim 4, the locking claw formed by cutting and bending up the rear surface of the frame member is engaged with the slit formed in the contact portion of the bracket. Thus, the rigidity of the bracket can be enhanced further, by more efficiently transmitting the impact at strongly closing the front hood from the contact portion to the frame member. At the frontal collision of the vehicle, the locking claw is easily deformed and disengaged from the slit, and thus the bracket can be deformed rearward without any trouble.

Further, according to the invention described in claim 5, in addition to the configuration of any one of claims 1 to 4, there is provided the hood lock device, wherein the paired first fixing portions, the paired deformable portions and the second fixing portion are integrally formed by bending a single metal plate.

According to the configuration of claim 5, the paired first fixing portions, the paired deformable portions, and the second fixing portion of the bracket are integrally formed by bending a single metal plate. Thus, the number of parts is reduced, which can contribute to cost reduction.

The above and other objects, characteristics and advantages of the present invention will be clear from detailed descriptions of the preferred embodiment which will be provided below while referring to the attached drawings.

### BRIEF DESCRIPTION OF THE DRAWINGS

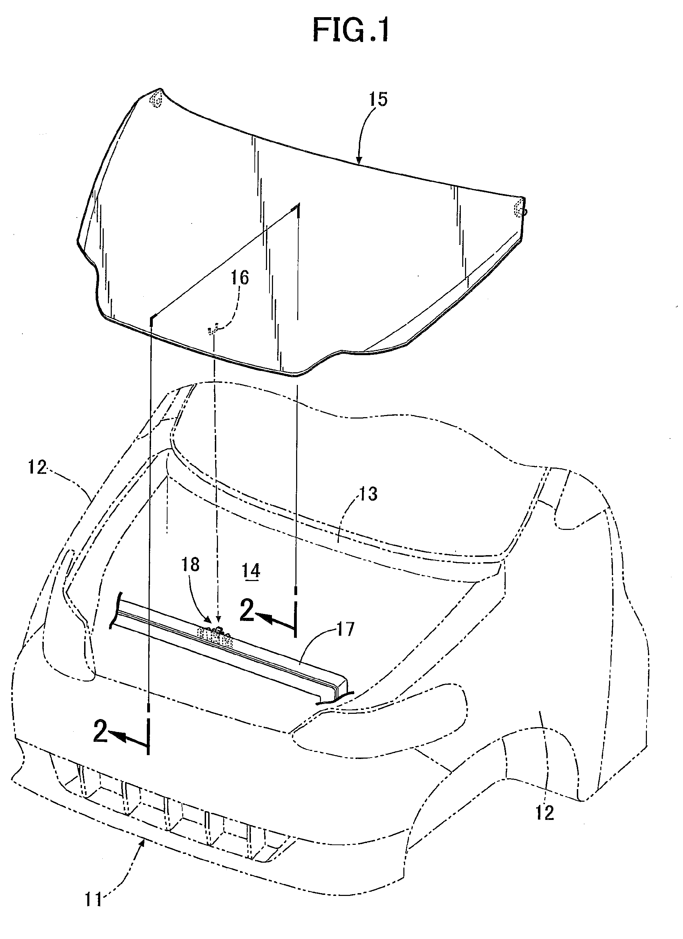

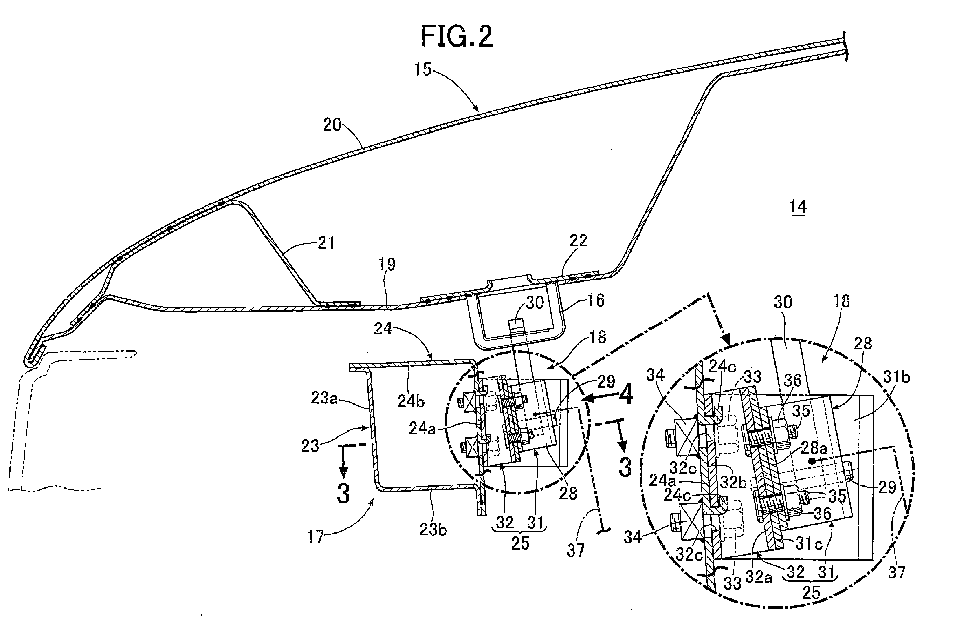

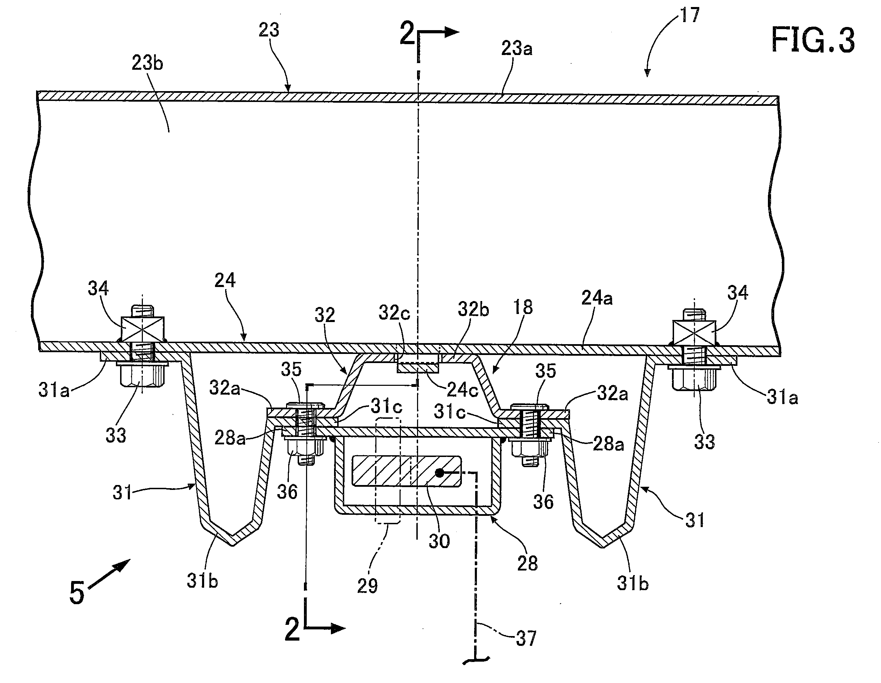

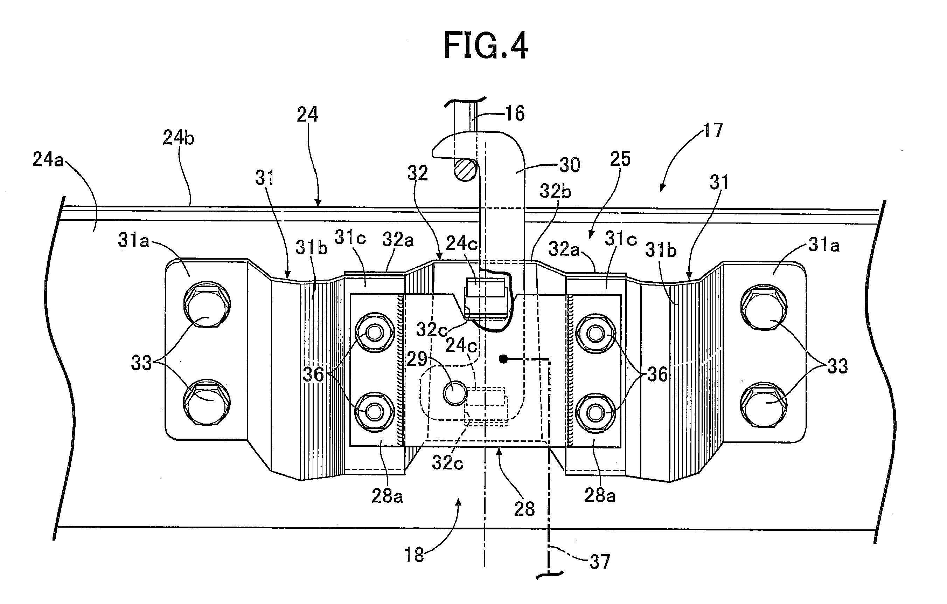

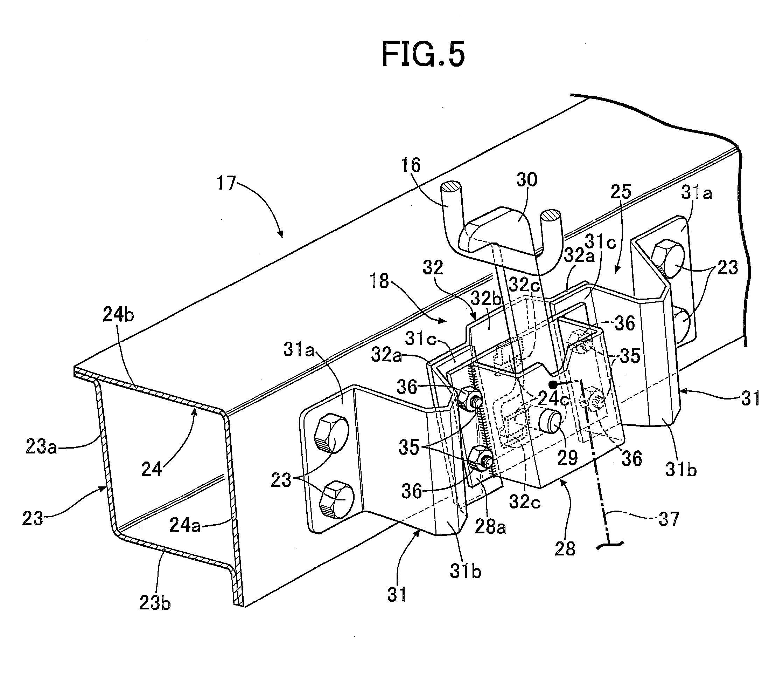

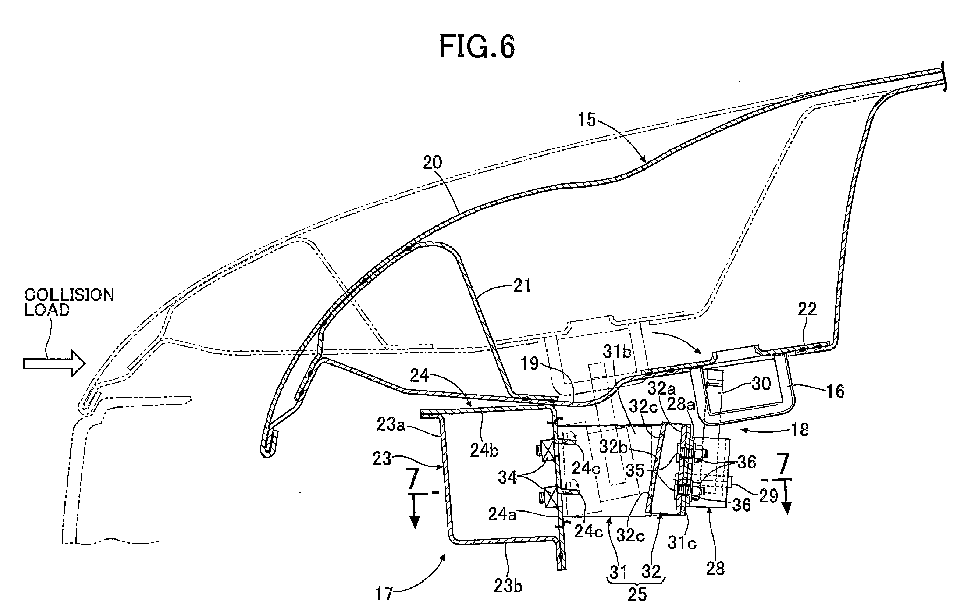

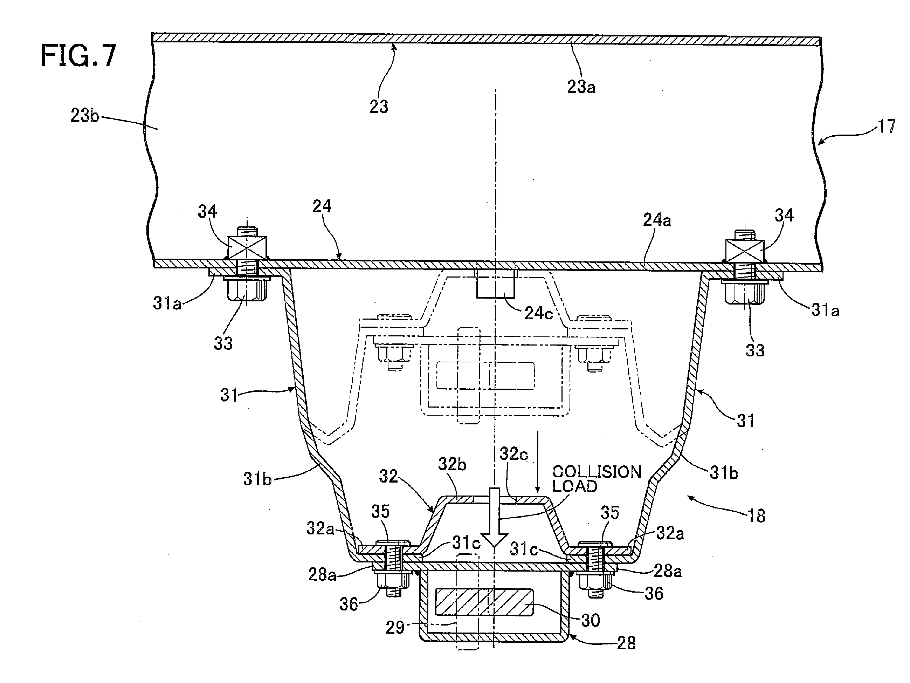

FIG. 1 is a perspective view of a front portion of a vehicle body of an automobile; FIG. 2 is a sectional view taken along a line 2-2 in FIG. 1; FIG. 3 is a sectional view taken along a line 3-3 in FIG. 2; FIG. 4 is a view seen from a direction of an arrow 4 in FIG. 2; FIG. 5 is a view seen from a direction of an arrow 5 in FIG. 3; FIG. 6 is an operation explanatory view at collision of a front part of the automobile; and FIG. 7 is a sectional view taken along a line 7-7 in FIG. 6.

### DESCRIPTION OF PREFERRED EMBODIMENT

Hereinbelow, a description is given of an embodiment of the present invention based on FIGS. 1 to 7. Here, in the specification, a front-rear direction and a right-left direction are defined with respect to an occupant sitting on a driver's seat.

As shown in FIG. 1, an engine room 14 surrounded by a front bumper 11, right and left front fenders 12, 12, and a dashboard 13 is openably and closably covered with a front hood 15. A U-shaped striker 16 is fixed on a lower surface of a front portion of the front hood 15. A lock device 18 is provided on an upper portion of a bulkhead 17 which is a frame member arranged in the engine room 14 to extend in the right-left direction. The front hood 15 is locked at a closed position by locking the striker 16 with the lock device 18.

As shown in FIGS. 2 to 5, the front hood 15 is formed in such a manner that a hood skin 20 is overlapped with an upper surface of a hood frame 19 and is joined to the hood frame 19 at a peripheral edge portion thereof. A stiffener 21 is welded to an inner surface of a front portion of the front hood 15. A plate-shaped bracket 22 having the striker 16 fixed thereon is welded to the hood frame 19 behind the stiffener 21.

The bulkhead 17 is formed in a quadrangular closed cross section by welding a first member 23 and a second member 24, the first member 23 having an L-shaped cross section including a front wall 23a and a lower wall 23b, the second member 24 having an L-shaped cross section including a rear wall 24a and an upper wall 24b. A bracket 25 for the lock device 18 is fixed on the rear wall 24a. The bracket 25 is formed by bending three metal plates and includes paired outer members 31, 31 and an inner member 32, the outer members 31, 31 being provided in opposite side portions in the right-left direction and fixed on the rear wall 24a of the second member 24, the inner member 32 being provided in a center portion in the right-left direction and connecting the outer members 31, 31.

Each outer member 31 integrally includes: a first fixing portion 31a provided in an outer portion in the right-left direction and fixed in the rear wall 24a of the second member 24 with bolts 33, 33 and nuts 34, 34; a deformable portion 31b being continuous with the first fixing portion 31a and having a U-shaped cross section; and a second fixing portion 31c continuous with the deformable portion 31b. The inner member 32 integrally includes: paired right and left fixing portions 32a, 32a each fixed on the second fixing portion 31c of the outer member 31 with bolts 35, 35 and nuts 36, 36; and a contact portion 32b protruding frontward from the fixing portions 32a, 32a and surface-contacting the rear wall 24a of the second member 24. The second fixing portions 31c, 31c of the outer members 31, 31 and the fixing portions 32a, 32a of the inner member 32 are inclined in such a manner that upper portions thereof are inclined frontward with respect to a vertical line V.

In addition to the bracket 25, the lock device 18 includes: a base portion 28 supported by the bulkhead 17 with the bracket 25 placed in between; and a hook 30, a lower end of which is pivotally supported by the base portion 28 with a fulcrum pin 29 inserted therein. The base portion 28 is a square-frame-shaped member which has front, rear, right, and left walls and opened upper and lower portions. Attachment plates 28a, 28a protruding from the front wall of the base portion 28 in the right-left directions are each fastened together with the corresponding second fixing portion 31c of the outer member 31 and the corresponding fixing portion 32a of the inner member 32 with the bolts 35, 35 and the nuts 36, 36. Accordingly, the base portion 28 is arranged in such a manner as to be sandwiched between the paired right and left deformable portions 31b, 31b of the respective right and left outer members 31, 31.

Two locking claws 24c, 24c cut and bent up to extend upward are formed in the rear wall 24a of the second member 24 of the bulkhead 17, and are engaged with two slits 32c, 32c formed in the contact portion 32b of the inner member 32.

When the striker 16 provided on the lower surface of the front hood 15 is engaged with the hook 30 of the lock device 18 with the front hood 15 closed, the front hood 15 is thereby locked at a closed position. For unlocking the lock device 18, connection means such as a cable 37 connects the hook 30 and an unillustrated unlocking lever provided in a vehicle cabin.

Next, a description of operations of the embodiment of the present invention having the above-described configuration will be given.

Suppose a case where a frontal collision with an obstacle such as a pedestrian occurs on a vehicle, and a rearward collision load is inputted from the femurs and the waist to a front end of the front hood 15. In this case, as shown in FIG. 6, the front portion of the front hood 15 buckles in the front-rear direction, so that collision energy is absorbed. At this time, the striker 16 provided on the lower surface of the front portion of the front hood 15 moves rearward, and the movement is transmitted to the base portion 28 through the hook 30 of the lock device 18.

The bracket 25 supporting the base portion 28 is constituted of the outer members 31, 31 and the inner member 32 which are formed of flexible metal plates, and particularly the paired outer members 31, 31 include the paired deformable portions 31b, 31b protruding rearward in a U-shape. Thus, when the base portion 28 is pushed rearward due to the collision load, the deformable portions 31b, 31b are deformed in such a manner as to extend rearward, so that the base portion 28 is moved rearward as shown in FIGS. 6 and 7. The striker 16 engaged with the base portion 28 by means of the hook 30 can move rearward in a large stroke, thereby enhancing the impact absorption performance against impact from the front.

In addition, when the front hood 15 is closed strongly, a downward load is inputted to the base portion 28 from the striker 16 through the hook 30. The bracket 25 formed of the metal plates is bent in the right-left direction, thus exhibits relatively high rigidity against the load in an up-down direction, and can reliably receive impact of the closing of the front hood 15. Moreover, the second fixing portions 31c, 31c of the outer members 31, 31 and the fixing portions 32a, 32a of the inner member 32 on which the base portion 28 is fixed are inclined in such a manner that the upper portions thereof are inclined frontward with respect to the vertical line V. Thus, the contact portion 32b is pressed against the rear wall 24a of the second member 24 of the bulkhead 17 due to the downward load from the closing of the front hood 15. For this reason, the impact can be received more reliably.

Further, since the slits 32c, 32c formed in the contact portion 32b of the bracket 25 are engaged with the locking claws 24c, 24c formed on the rear wall 24a of the second member 24 of the bulkhead 17, the bulkhead 17 can more reliably receive the downward load from the closing of the front hood 15. The position of the base portion 28 is prevented from being shifted downward, so that the front hood 15 can be reliably held at the closed position. Note that when the rearward collision load is inputted in the base portion 28, the locking claws 24c, 24c are easily bent and disengaged from the slits 32c, 32c of the contact portion 32b of the bracket 25. Thus, rearward deformation of the deformable portions 31b, 31b and the rearward movement of the base portion 28 are not hindered.

As described above, according to this embodiment, the magnitude of the collision load from the front at which the deformable portions 31b, 31b of the bracket 25 are deformed upon input of the load is constant without being influenced by a bolt tightening torque, and can be set optionally according to the plate thickness or the shape of the bracket 25. Thus, the front portion of the front hood 15 is always moved in a stroke rearward at an optimum load, so that the effect of absorbing the collision energy can be enhanced.

An embodiment of the present invention has been described above, but various design modifications can be made without departing from the gist of the present invention.

For example, the frame member of the present invention is not limited to the bulkhead 17 in the embodiment.

In addition, the bracket 25 is constituted of the three members of the paired outer members 31, 31 and the inner member 32 in the embodiment. The three members, however, may be formed of a single metal plate. This can reduce the number of parts.

A bracket (25) supporting a base portion (28) of a lock device (18) to a frame member (17) includes paired first fixing portions (31a) which are fixed to the frame member (17), a second fixing portion (31c, 32a) to which the base portion (28) is fixed, and paired deformable portions (31b) which are formed of metal plates, and each of which is bent into a U shape with opposite ends thereof connected respectively with a corresponding one of the paired first fixing portions (31a) and the second fixing portion (31c, 32a). Thus, when a collision load of a frontal collision imposed on a front hood is transmitted to the base portion (28), plastic deformation occurs in the deformable portions (31b) of the bracket (25), whereby the base portion (28) is moved rearward to ensure an impact absorption stroke of the front hood. At this time, the load causing the plastic deformation of the deformable portions (31b) is constant without being influenced by the bolt tightening torque. Thus, a front portion of the front hood is always moved in a stroke rearward at an optimum load, so that the effect of absorbing the collision energy can be enhanced. Accordingly, it is possible to ensure an impact absorption stroke at collision of a front portion of an automobile by moving a front portion of a front hood rearward at a desirable load.

## Claims

1. A hood lock device in which a striker (16) provided in a protruding manner downward from a front portion of a front hood (15) is locked with a lock device (18) provided on a frame member (17) of a vehicle body, the front hood (15) openably and closably covering an engine room (14),
**characterized in that**
the lock device (18) comprises:
a bracket (25) fixed on a rear surface of the frame member (17);
a base portion (28) fixed to the bracket (25); and
a hook (30) movably supported by the base portion (28) and configured to be engaged with and disengaged from the striker (16), and
the bracket (25) comprises:
paired first fixing portions (31a) which are provided on opposite sides in a right-left direction and are fixed to the frame member (17);
a second fixing portion (31c, 32a) which is provided at a middle in the right-left direction and to which the base portion (28) is fixed; and
paired deformable portions (31b) which are formed of metal plates, and each of which is bent into a U shape with opposite ends thereof connected respectively with a corresponding one of the paired first fixing portions (31a) and the second fixing portion (31c, 32a).

2. The hood lock device according to claim 1, wherein the bracket (25) comprises a contact portion (32b) between a right and left pair of the second fixing portions (31c, 32a), the contact portion (32b) contacting the rear surface of the frame member (17).

3. The hood lock device according to claim 2, wherein the second fixing portions (31c, 32a) are each inclined from an upper front to a lower rear.

4. The hood lock device according to claim 2 or 3, wherein a locking claw (24c) formed by cutting and bending up the rear surface of the frame member (17) is engaged with a slit (32c) formed in the contact portion (32b).

5. The hood lock device according to any one of claims 1 to 4, wherein the paired first fixing portions (31a), the paired deformable portions (31b) and the second fixing portion (31c, 32a) are integrally formed by bending a single metal plate.
